# EUROPEAN PATENT APPLICATION

(11) **EP 1 271 900 A1**
(43) Date of publication of application: **02.01.2003**
(21) Application number: 01113407.9
(22) Date of filing: 01.06.2001
(51) Int. Cl.: H04M 1/23, H04M 1/247, H01H 13/70

(54) **Keypad system**

(71) Applicant: SIEMENS AKTIENGESELLSCHAFT, 80333 München (DE)
(72) Inventor: Kaelbling, Michael, Dr., 81739 München (DE)

(57) **Abstract**

The inventive device seeks to convert the natural motions of a human hand and fingers into characters on a compact portable electronic device. More concretely, the inventive handset arrangement allows data to be entered conveniently into a small telephone with the hand that is holding the handset and without necessitating the support of a surface or a second hand. Fine-grained position or pressure measurement devices are incorporated into at least one button, the presence of a user's finger and the degree of pressure applied by the user are mapped to particular data entry choices. The inventive device thus provides a convenient alternative to a conventional keypad.

## Description

The present invention relates to improvements in keypads. In particular the present invention relates to a data entry arrangement for portable electronic devices which allows a reduction in overall size and mass of the device.

The data entry arrangements provided on the majority of portable electronic devices, for example portable digital assistants (PDAs), mobile telephones, remote controller devices and pocket games consoles, are limited to standard keypad or keyboard arrangements. Often these data entry arrangements are inappropriate or awkward to be used by an unsupported single hand.

Mobile telephone handsets are made small and light so that they are portable and convenient to carry on the user's person. A keypad for a mobile telephone typically has between twelve and twenty buttons, or keys, for controlling the operation of the telephone.

Current models of mobile telephone are so feature-packed that the limited number of keys are typically associated with several functions and/or meanings. The number keys are conventionally made to operate as an alphanumeric keypad. According to a commonly adopted standard the "2"-key is associated with the letters "A","B" or "C", in addition to the "2" character. Likewise the "3"-key is associated with "DEF" and so on until the "9" key with "WXYZ". The "1" key is generally associated with a space/blank and the "0" key is often associated with special symbols. A known, and natural, extension of the standard is to further incorporate characters belonging to languages other than English: in German, for example, accented characters (ä, ö and ü) and the "β" can each be associated with an appropriate number key.

The three- or four-letter groups and the special characters have gained added meaning with the advent of Short Message Service (SMS). SMS allows users to compose brief textual messages for delivery via the mobile telephone network. Typically, characters are selected by repeatedly pressing the associated number key and cycling through the choices until a pause (or selection of another key) by the user indicates a choice has been made. This scheme is known as multi-press input.

An alternative to multi-press input is the so-called two key input scheme. At the first key press a specific letter group is selected and the key press immediately following that will relate to the place of the desired letter in the group. Thus first pressing "5" for J, K or L and then pressing "2" will result in the input of a "K".

In either of the above schemes, the keypad is generally provided with a default timeout period so that a pause in input longer than the timeout period will interpreted as a confirmation of the most recent key press by default. Confirmation of an initial input by selection of a further, different, key (including a dedicated confirmation key) is also possible under the multi-press input scheme.

A variation on the multi-press input principle appears in the T9 text entry scheme as disclosed in US Patent Publication No. 5,818,437. Under T9, the user types just once on each numerical key corresponding to the group of letters containing the desired letter until the word is complete. A processor within the mobile handset accesses a dictionary of complete words and suggests a list of possible complete words corresponding to the numerical sequence entered. In the T9 scheme the confirmation of the data to be entered is rendered word by word rather than letter by letter.

Certain mobile telephones implement the data entry schemes by providing data entry keys to permit selection of a particular character and a separate confirmation key to confirm that selection. Under T9, this means that the numerical keyboard is used to type a complete word and a separate selection key is used to cycle through each of the possible complete words.

Key surfaces are restricted in area and dimension in order to comply with actual or *de facto* standard key arrangements. In addition, the length, breadth and depth of key surfaces are limited on the one hand by a general need to keep overall size to a minimum in order to enhance portability and on the other by the opposing need to have keys large enough to allow accurate data entry. Simply reducing the dimensions of keys makes them harder to press accurately, especially for users with large or insensitive fingers or with impaired fine motor co-ordination. The loss of accuracy due to reduced key size is partially due to the user unintentionally pressing neighbouring keys.

The problem of making a keypad device small while ensuring accurate operation has previously been addressed in a number of ways. Some devices provide a stylus with which to press miniature keys; effectively providing a small finger for a small key.

Styli are often used in conjunction with PDAs. Generally the PDA has a touch sensitive display which the user may interact with by means of a stylus. Touch sensitive screens may be resistive or capacitive in nature or they may rely on sensing the interruption of a standing infrared or acoustic wave.

The keypad may itself be rendered as a touch sensitive portion of a touch sensitive display thereby dispensing with the need for a physical keypad. Naturally, a touch sensitive display can be accessed by the user directly with his finger, or at least his fingernail, in the absence of a stylus. Other devices provide auxiliary voice input where speech recognition is used to select characters by name. Indeed speech recognition can render use of a keypad all but redundant.

Still other devices provide audible feedback, for instance: a click indicating that a key has been pressed; a tone having a unique pitch, which the user could theoretically identify with accuracy; or a voice playback which repeats the character selected in an artificial voice. Naturally many electronic devices are already provided with audio feedback devices for other reasons: for example, the loudspeaker unit of a mobile telephone is used to convert received electronic signals so that a remote caller's voice can be heard. Audible feedback may thus be provided through a pre-existing audio feedback device.

The known solutions described above have all been applied to fixed telephone equipment, PDAs and mobile telephone handsets.

It is known to allow data entry and feedback in the form of tactile feedback. A particular example of a device with tactile feedback is the Braillex [RTM] terminal, whereby the user places fingers over a feedback area and portions of the feedback area are dynamically raised and lowered to represent Braille characters.

Unlike old rotary dial phones, many conventional telephone devices now include visual feedback indicating the character or number selected. Visual feedback devices include liquid crystal display (LCD) devices, light emitting diode (LED) arrangements, and cathode ray tubes (CRT).

Where the portable electronic device is a remote controller for a CRT device, for example, a television (TV), an alternative visual feedback scheme is generally adopted. Visual feedback is generally displayed as on-screen display (OSD) information on the CRT screen.

When it is necessary to make a keypad device small while still ensuring accurate operation by users, the above solutions have certain disadvantages. Firstly, the input schemes described above are made considerably more difficult and less accurate when conventional keys are simply reduced in size. Secondly, voice activation and touch sensitive displays require a greater portion of data processing power than simple keystrokes. In portable devices one severely limiting factor is battery life; additional data processing draws more heavily on battery power than would be the case in the absence of voice activation and touch sensitive displays. Compensating for increased power consumption with increased battery capacity generally results in an undesirable increase in weight of the device.

The keys which are provided in conventional physical keypads are generally mechanical components. They are biased into an "off" position and when depressed, either complete or break a circuit. It is possible to provide mechanical keys which have more than two positions.

A number of techniques are known for detecting the degree of displacement or pressure being applied to a key, throughout the following discussion a device operating according to any one of these techniques is termed a fine-grained measurement device. Not only do piezoelectric devices allow the presence of a finger or stylus to be detected, they also allow the degree of pressure applied to a key to be measured. Likewise a plunger key that measures the degree to which a key is depressed can be implemented in place of a conventional two position key.

It is known to incorporate fine-grained displacement (or pressure) measurement devices into multiple position switches. The keys of a keypad can be replaced by multiple position switches thus facilitating novel data entry schemes, as disclosed in co-pending European Patent Application with Agent's docket number 2001P02560/EP.

A factor which prevents conventional data entry arrangements being convenient for unsupported, single-hand data entry is the disposition and nature of the keys used. Often a single hand cannot physically reach and press a key without losing grip on the electronic device. Fingers are somewhat constrained in their movements and may be unable to enter data accurately.

The inventive device seeks to convert the natural motions of a human hand and fingers into characters on a compact portable electronic device. In particular, the inventive handset arrangement allows data to be entered conveniently into a small telephone with the hand that is holding the handset and without necessitating the support of a surface or a second hand.

Whilst single-hand data entry is possible using small keypads, the smaller the keypad is the less likely it is that data can be entered accurately without careful fingertip typing or use of a stylus. Either of said data entry methods generally require the use of two hands or the use of a supporting surface, for example a table-top or a base unit. Peripheral devices for personal computers, for example joysticks, computer mice, trackballs and gamepads, provide alternative data entry input to conventional keyboards and keypads. Certain peripheral devices are ergonomically arranged to facilitate data entry while avoiding repeated awkward finger or hand movements. Peripheral devices are however not independent portable electronic devices and are generally not optimised for portability, compactness or single-hand use.

It is therefore an object of the invention to obviate or at least mitigate the aforementioned problems.

In accordance with one aspect of the present invention, there is provided a data entry arrangement for enabling entry of data into a hand-portable electronic device by a user using one unsupported hand, the data entry arrangement including: data input means for generating a data entry signal in response to user manipulation thereof, said signal corresponding to a value of a measurement parameter which value is variable in dependence upon said user manipulation; and a processing means for interpreting said signal, wherein each of a plurality of ranges of possible parameter values is associated with one of a plurality of groups of possible data entries. Advantageously the measurement parameter may be displacement and the data input means may be a fine-grained displacement measurement component. The displacement measurement component may be an electromechanical multi-position switch, whereby the displacement measured is the displacement of a movable portion of the measurement component relative to a predetermined position. Alternatively the displacement measurement component may be a piezoelectric detector, whereby the displacement measured is displacement relative to a predetermined position of a point at which pressure is detected by the piezoelectric detector. The displacement measured may also be a displacement path traced by a point at which pressure is detected by the piezoelectric detector.

Equally advantageously the measurement parameter may be pressure and the data input means may be a fine-grained pressure measurement component. The pressure measurement component may be a piezoelectric detector, whereby the pressure measured is pressure applied to the measurement component by a user, a given range of pressure applied being associated with a respective one of a plurality of groups of possible data entries. Preferably the data entry arrangement further comprises at least one auxiliary data entry component.

A given one of said at least one auxiliary data entry components may be a confirmation button for confirming the selection of the respective group of possible data entries and for confirming a selection of a certain data entry from amongst said respective group.

The given one auxiliary data entry component may also function as a cancellation button for cancelling selections made using the measurement component.

Alternatively a further one of said at least one auxiliary data entry components may be a cancellation button for cancelling selections made using the measurement component.

Preferably the data entry arrangement further includes a display means for displaying selected and confirmed data entries.

In accordance with another aspect of the present invention, there is provided a data entry arrangement for enabling entry of data into a hand-portable electronic device by a user using one unsupported hand, the data entry arrangement including: data input means, which in operation generates a data entry signal in response to user manipulation thereof, said signal corresponding to a value of a user-influenced measurement parameter and each of a plurality of ranges of possible values of said parameter being associated with a respective one of a plurality of groups of possible data entries; a first auxiliary data entry component, which in operation outputs a confirmation signal for confirming the selection of the respective group of possible data entries and for confirming a selection of a certain data entry from amongst said respective group; a second auxiliary data entry component, which in operation outputs a cancellation signal for cancelling selections made using the measurement component; a processing means which processes said data entry signal, said confirmation signal and said cancellation signal and which generates a control signal; and a display means for displaying selected and confirmed data entries in accordance with the control signal.

Advantageously the measurement parameter may be displacement and the data input means may be a fine-grained displacement measurement component. The displacement measurement component may be an electromechanical multi-position switch, whereby the displacement measured is the displacement of a movable portion of the measurement component relative to a predetermined position. Alternatively the displacement measurement component may be a piezoelectric detector, whereby the displacement measured is displacement relative to a predetermined position of a point at which pressure is detected by the piezoelectric detector. The displacement measured may also be a displacement path traced by a point at which pressure is detected by the piezoelectric detector.

Equally advantageously the measurement parameter may be pressure and the data input means may be a fine-grained pressure measurement component. The pressure measurement component may be a piezoelectric detector, whereby the pressure measured is pressure applied to the measurement component by a user, a given range of pressure applied being associated with a respective one of a plurality of groups of possible data entries.

In accordance with yet other aspect of the present invention, there is provided a hand-portable electronic device having a data entry arrangement as described above.

The inventive step is the application of fine-grained position or displacement measurement devices to the task of controlling portable electronic devices traditionally built with keypads.

In this respect data entry can conveniently be implemented as a multi-press input scheme or alternatively as a two key input scheme.

Through the substitution of a keypad by presence and fine-grained displacement measurement devices, the class of inventions allows smaller units to perform the same functions as larger units. Fine-grain measurement devices allow smaller footprints, which can free up room for larger sub-components, like displays. Current devices, like touch-pads can be positioned on previously unused or underused surfaces, like the side of back of a mobile telephone. Interesting stylistic and aesthetic effects can be achieved by substitution of any number of novel arrangements for a traditional keypad. The overall area of the measurement unit can be used more effectively than the dedicated small keys of a keypad.

For a better understanding of the present invention, reference will now be made, by way of example only, to the accompanying drawings in which:-
Figure 1A shows an electronic device arranged in accordance with one embodiment of the present invention;
Figure 1B shows a side view of the electronic device of Figure 1A;
Figure 2 shows a first handset arrangement in accordance with an embodiment of the present invention;
Figure 3 shows a second handset arrangement in accordance with an embodiment of the present invention;
Figure 4 shows a third handset arrangement in accordance with an embodiment of the present invention;
Figure 5 shows a fourth handset arrangement in accordance with an embodiment of the present invention;
Figure 6 shows examples of a keying procedure suitable for use in accordance with a further embodiment of the present invention;
Figures 7A and 7B show front and rear views of a fifth handset arrangement in accordance with an embodiment of the present invention; and
Figure 8 shows a sixth handset arrangement in accordance with an embodiment of the present invention.

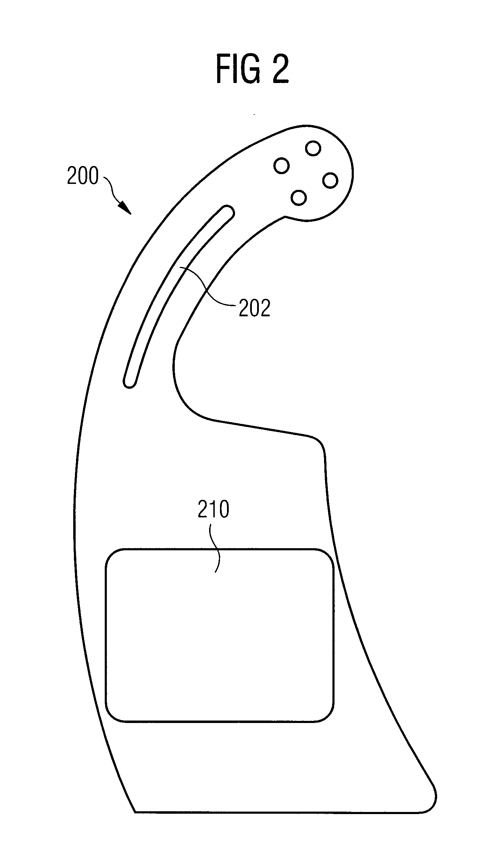

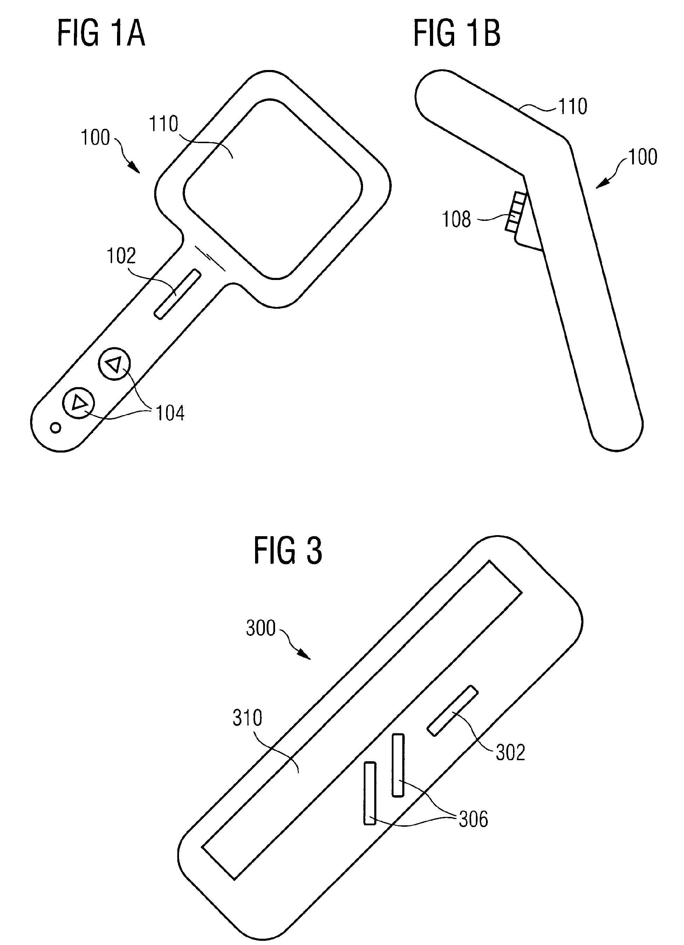

An electronic device arranged in accordance with the present invention comprises a number of logic units. The electronic device 100 illustrated in Figures 1A and 1B comprises a display unit 110, a measurement unit 102, a processing means (not shown) and auxiliary inputs 104,108. The processing means may be provided with memory means. Alternatively the electronic device may be provided with a discrete memory means which is connectable with the processing means. Memory means may be volatile or non-volatile, for example ROM, EEPROM, Flash memory or RAM.

A user enters data by operating the measurement unit 102. The measurement unit 102 outputs a measurement signal corresponding to the user's input. The measurement signal is then processed by the processing means, resulting in the output of a control signal. The display unit 110 displays data entry options in accordance with the control signal.

The auxiliary inputs 104,108 are also connected to the processing means. In one embodiment one of the auxiliary inputs is a confirmation button 104 and the other auxiliary input is a cancellation button 108. When the user operates the confirmation button 104, a confirmation signal is conveyed to the processing means. The confirmation signal is then processed with the measurement signal and the entry of the current data entry option is fixed. This fixation may require the fixed data entry option to be stored in the memory means.

When, however, the user operates the cancellation button 108, a cancellation signal is conveyed to the processing means. The cancellation signal is then processed with the measurement signal and the entry of the current data entry is annulled. The cancellation of a data entry may require that a data entry or combination of data entries stored in the memory means are erased from the memory means.

Data entry in electronic devices provided with auxiliary inputs can conveniently be implemented as a multi-press input scheme or alternatively as a two key input scheme as discussed above.

Figure 2 to 5 illustrate the variety of handset arrangements to which the arrangement of the present invention can apply. In each case the electronic device has a display (210; 310; 410; 510), a measurement unit (or data entry unit) (202; 302; 402; 502) and auxiliary input components (306; 406; 506).

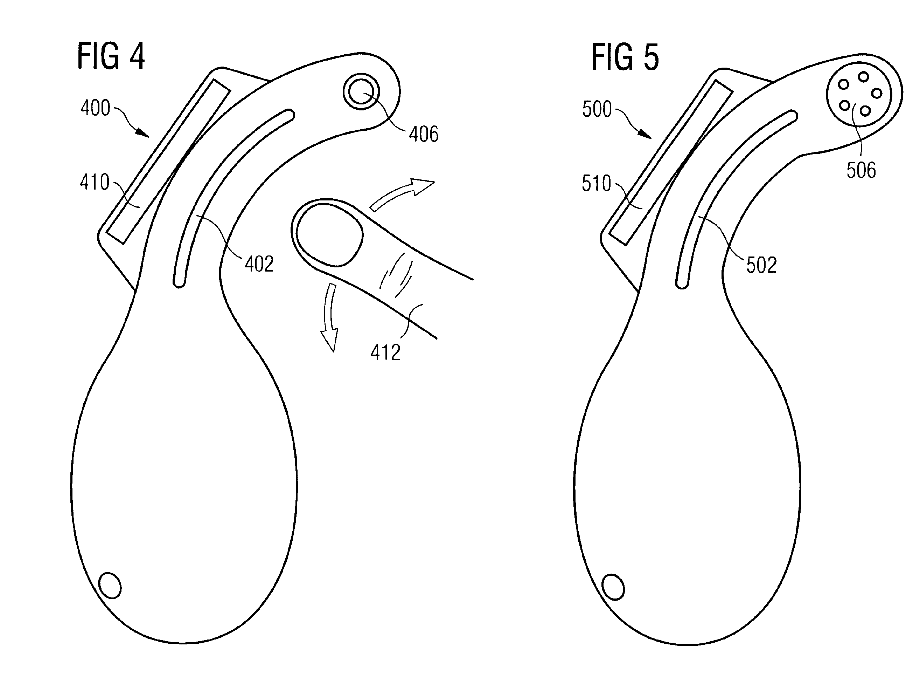

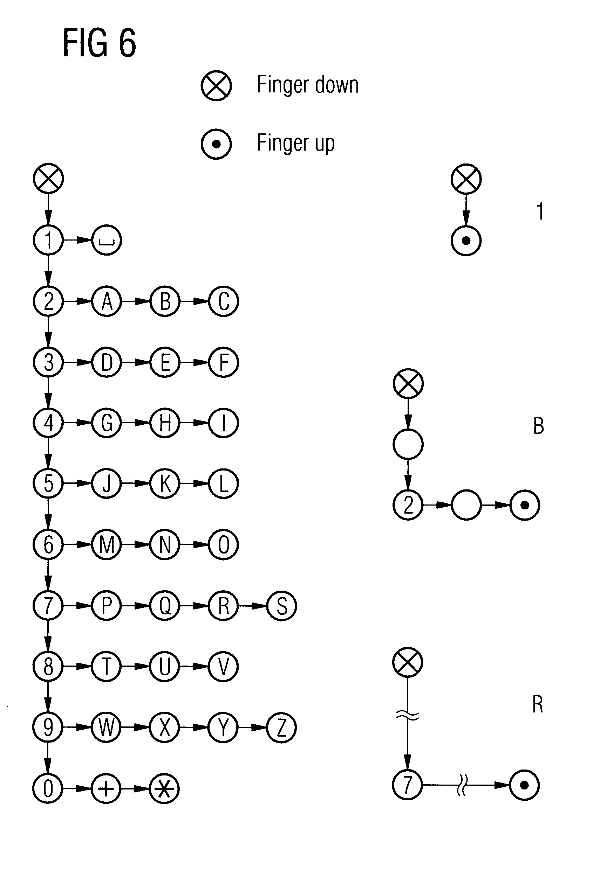

The shape of the handset may be selected for practical reasons of ease of manufacture, the need to encompass components in a housing and to improve the portability of the handset. In Figures 4 and 5, the handset allows a user's thumb 412 to sweep ergonomically and comfortably across the measurement unit (402; 502).

In alternative configurations the auxiliary inputs and/or the display are not required. In particular a device having voice feedback unit may function adequately without a display unit provided anything which the display unit could have reproduced can also be communicated using a device-generated voice instead.

Examples of suitable processor units include: microcontrollers; microprocessors; personal computers (PCs); personal digital assistants (PDAs) and similar programmable electronic devices; and dedicated processing modules, for example a PCMCIA card with dedicated input/output (I/O) modules. The processor maps sensed data, supplied by the measurement unit, to data entry characters, all or some of which are displayed by the display unit.

The display unit may be a typical LCD, LED, or other electronic display or it may be an electromechanical output device. The display provides the operator with a graphical indication of the sequence of characters input. This feedback may be useful if extremely small displacements are to be measured accurately.

Additionally or alternatively, feedback may be provided by and audio feedback device for instance a loudspeaker or a buzzer.

Alternatives to mechanical keys include: touch sensitive keys, which as outlined above, may be resistive or capacitive in nature; and electro- or opto-mechanical arrangements for detecting the presence of a finger above a key or the motion of the finger across a detector surface or an area of effect, for example relying on sensing the interruption of a standing infrared or acoustic wave. The key or keypad resulting from either alternative scheme may be sensitive in one or more dimensions, depending on the requirements of the user interface. One-degree-of-freedom keys or keypads need only detect the presence of a finger, for example by pressure, capacitance, temperature or image analysis, or other known means.

Two degree-of-freedom keys or keypads, in contrast, can sense position in two or more axes thus allowing data entry to be mapped in an alternative fashion.

A finger can trace out the shape either of a letter itself which can then be recognised using optical character recognition techniques (OCR) or the finger can simply trace a path to the desired data entry character.

In one example, as illustrated in Figure 6, the possible data entry characters are disposed according to a simple pattern whereby vertical position corresponds to a certain number value from a scale of the digits 1,2, ... , 9,0 and a horizontal position corresponds to an ordered entry in a group of letter characters associated with the certain number value; "B" is selected by having the finger at "2" on the vertical scale and "third entry" (from left) on the horizontal scale. Likewise "R" is selected by having the finger at "7" on the vertical scale and "fourth entry" on the horizontal scale.

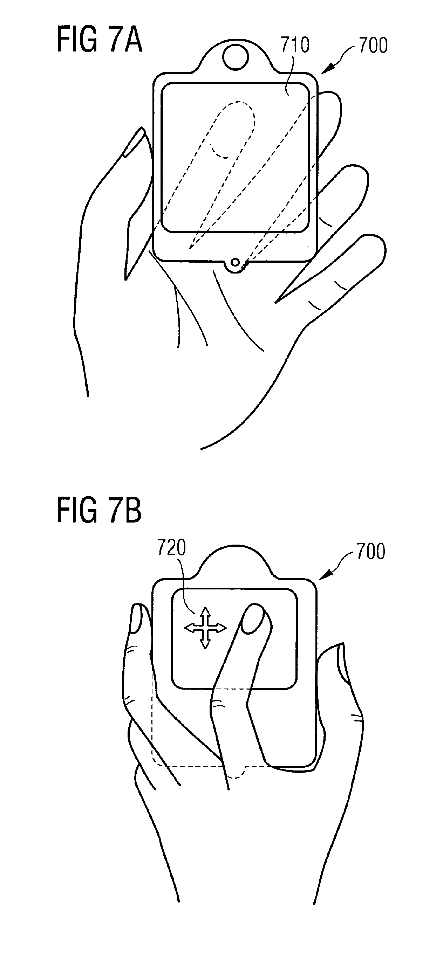

Figures 7A and 7B show front and rear views of a handset arrangement upon which the data keying technique illustrated in Figure 6 could be implemented. A semi-transparent display 710 is arranged on the front of the handset as shown in Fig. 7A, while a touch-sensitive pad 720 at the rear of the handset allows the movements of a single finger to be translated into character entries. An advantage of this embodiment is the potential reduction in surface area presented by the handset arrangement.

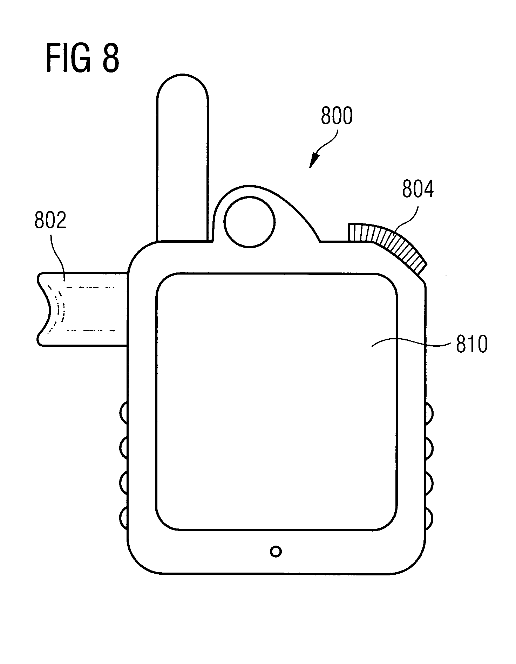

Figure 8 shows a handset arrangement 800 having a display 810, a plunger component 802 and a trigger component 804. The operation of the electronic device arranged with the plunger and trigger components can be demonstrated for the entry of the characters "K2".

The default state of the handset arrangement has the trigger component in the "up" position and the plunger component fully out as shown in Figure 8. The plunger is pressed in 5 units until the display displays "5", the trigger is depressed to indicate selection. The display now shows "5JKL" with "5" emphasised. Pushing the plunger in by 2 additional units changes the character emphasised in the group "5JKL" from "5" to "K". The trigger is released to indicate confirmation and the display now shows a confirmed entry - "K". The plunger is depressed 2 units and the display now shows the confirmed entry "K" and "2". As before the trigger is then depressed to select. The display now shows "K" and "2ABC" with "2" emphasised. Releasing the trigger confirms the selection of "2" and the display finally shows "K" and "2".

The preceding discussion makes no reference to the handedness of the user of the device. In certain embodiments, a left-handed and a right-handed version of the handset arrangement would be identical mirror images of each other, for instance to accommodate the respective holding hand ergonomically. In other embodiments only certain elements of the data entry arrangement need to be altered, for example mirroring the direction of the "L"-shaped displacements made in Figure 6 to facilitate data entry by a left-handed user.

## Claims

1. A data entry arrangement for enabling entry of data into a hand- portable electronic device by a user using one unsupported hand, the data entry arrangement including:
data input means for generating a data entry signal in response to user manipulation thereof, said signal corresponding to a value of a measurement parameter which value is variable in dependence upon said user manipulation; and
a processing means for interpreting said signal,
wherein each of a plurality of ranges of possible parameter values is associated with one of a plurality of groups of possible data entries.

2. A data entry arrangement according to Claim 1, wherein the measurement parameter is displacement and wherein the data input means is a fine-grained displacement measurement component.

3. A data entry arrangement according to Claim 2, wherein the displacement measurement component is an electromechanical multi-position switch, whereby the displacement measured is the displacement of a movable portion of the measurement component relative to a predetermined position.

4. A data entry arrangement according to Claim 2, wherein the displacement measurement component is a piezoelectric detector, whereby the displacement measured is displacement relative to a predetermined position of a point at which pressure is detected by the piezoelectric detector.

5. A data entry arrangement according to Claims 2 or 4, wherein the displacement measured is a displacement path traced by a point at which pressure is detected by the piezoelectric detector.

6. A data entry arrangement according to Claim 1, wherein the measurement parameter is pressure and wherein the data input means is a fine-grained pressure measurement component.

7. A data entry arrangement according to Claim 6, wherein the pressure measurement component is a piezoelectric detector, whereby the pressure measured is pressure applied to the measurement component by a user, a given range of pressure applied being associated with a respective one of a plurality of groups of possible data entries.

8. A data entry arrangement according to any one of the preceding claims, further comprising at least one auxiliary data entry component.

9. A data entry arrangement according to Claim 8, wherein a given one of said at least one auxiliary data entry components is a confirmation button for confirming the selection of the respective group of possible data entries and for confirming a selection of a certain data entry from amongst said respective group.

10. A data entry arrangement according to Claim 9, wherein the given one auxiliary data entry component also functions as a cancellation button for cancelling selections made using the measurement component.

11. A data entry arrangement according to Claims 8 or 9, wherein a further one of said at least one auxiliary data entry components is a cancellation button for cancelling selections made using the measurement component.

12. A data entry arrangement according to any one of the preceding claims, the data entry arrangement further including a display means for displaying selected and confirmed data entries.

13. A data entry arrangement for enabling entry of data into a hand-portable electronic device by a user using one unsupported hand, the data entry arrangement including:
data input means, which in operation generates a data entry signal in response to user manipulation thereof, said signal corresponding to a value of a user-influenced measurement parameter and each of a plurality of ranges of possible values of said parameter being associated with a respective one of a plurality of groups of possible data entries;
a first auxiliary data entry component, which in operation outputs a confirmation signal for confirming the selection of the respective group of possible data entries and for confirming a selection of a certain data entry from amongst said respective group;
a second auxiliary data entry component, which in operation outputs a cancellation signal for cancelling selections made using the measurement component;
a processing means which processes said data entry signal, said confirmation signal and said cancellation signal and which generates a control signal; and
a display means for displaying selected and confirmed data entries in accordance with the control signal.

14. A data entry arrangement according to Claim 13, wherein the measurement parameter is displacement and wherein the data input means is a fine-grained displacement measurement component.

15. A data entry arrangement according to Claim 14, wherein the displacement measurement component is an electromechanical multi-position switch, whereby the displacement measured is the displacement of a movable portion of the measurement component relative to a predetermined position.

16. A data entry arrangement according to Claim 14, wherein the displacement measurement component is a piezoelectric detector, whereby the displacement measured is displacement relative to a predetermined position of a point at which pressure is detected by the piezoelectric detector.

17. A data entry arrangement according to Claims 14 or 16, wherein the displacement measured is a displacement path traced by a point at which pressure is detected by the piezoelectric detector.

18. A data entry arrangement according to Claim 13, wherein the measurement parameter is pressure and wherein the data input means is a fine-grained pressure measurement component.

19. A data entry arrangement according to Claim 18, wherein the pressure measurement component is a piezoelectric detector, whereby the pressure measured is pressure applied to the measurement component by a user, a given range of pressure applied being associated with a respective one of a plurality of groups of possible data entries.

20. A hand-portable electronic device having a data entry arrangement as claimed in any one of the preceding claims.
